(19) Europäisches Patentamt
European Patent Office
Office européen des brevets

(11) EP 3 395 434 B1

(12) **EUROPEAN PATENT SPECIFICATION**

(45) Date of publication and mention of the grant of the patent:
**12.05.2021 Bulletin 2021/19**

(21) Application number: **16879026.9**

(22) Date of filing: **22.12.2016**

(51) Int Cl.:
***B01D 71/56*** *(2006.01)*
***B01D 69/02*** *(2006.01)*
***B01D 69/12*** *(2006.01)*
***B01D 71/82*** *(2006.01)*
***B32B 27/34*** *(2006.01)*
***C08G 69/32*** *(2006.01)*
***B01D 67/00*** *(2006.01)*

(86) International application number:
**PCT/JP2016/088584**

(87) International publication number:
**WO 2017/111140 (29.06.2017 Gazette 2017/26)**

(54) **COMPOSITE SEMIPERMEABLE MEMBRANE**

HALBDURCHLÄSSIGE VERBUNDMEMBRAN

MEMBRANE SEMI-PERMÉABLE COMPOSITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2015 JP 2015254724**

(43) Date of publication of application:
**31.10.2018 Bulletin 2018/44**

(73) Proprietor: **Toray Industries, Inc.**
**Tokyo 103-8666 (JP)**

(72) Inventors:
- **OGAWA, Kumiko**
  **Otsu-shi**
  **Shiga 520-8558 (JP)**
- **SHIMURA, Harutoki**
  **Otsu-shi**
  **Shiga 520-8558 (JP)**
- **SASAKI, Takao**
  **Otsu-shi**
  **Shiga 520-8558 (JP)**

(74) Representative: **Hoefer & Partner Patentanwälte mbB**
**Pilgersheimer Straße 20**
**81543 München (DE)**

(56) References cited:
**EP-A1- 1 020 218**
**EP-A1- 2 540 385**
**EP-A1- 2 805 761**
**WO-A1-2011/078047**
**WO-A1-2013/108788**
**WO-A1-2014/003141**
**WO-A1-2014/133130**
**JP-A- H11 347 385**
**US-B1- 6 171 497**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 395 434 B1

## Description

TECHNICAL FIELD

The present invention relates to a composite semipermeable membrane useful for selective separation of a liquid mixture. The composite semipermeable membrane obtained by the present invention is suitable for use in desalination of brackish water or seawater.

BACKGROUND ART

Membrane separation methods are coming to be increasingly used as methods for removing substances (e.g., salts) from solvents (e.g., water) which contain the substances dissolved therein. The membrane separation methods are attracting attention as energy-saving and resource-saving processes.

Examples of the membranes for use in the membrane separation methods include microfiltration membranes, ultrafiltration membranes, nanofiltration membranes, and reverse osmosis membranes. These membranes are used for producing potable water, for example, from seawater, brackish water, or water containing a harmful substance, and for producing industrial ultrapure water, wastewater treatments, recovery of valuables, etc. (Patent Documents 1 and 2).

Most of the reverse osmosis membranes and nanofiltration membranes that are commercially available at present are composite semipermeable membranes. There are two kinds of composite semipermeable membranes: ones including a porous supporting layer and, disposed thereover, a gel layer and an active layer formed by crosslinking a polymer; and ones including a porous supporting layer and an active layer formed by condensation-polymerizing monomers on the porous supporting layer. Among the latter composite semipermeable membranes, a composite semipermeable membrane having a separation functional layer including a crosslinked polyamide obtained by the polycondensation reaction of a polyfunctional amine with a polyfunctional aromatic acid halide is in extensive use as a separation membrane having high permeability and selectively separating properties.

In fresh-water production plants employing reverse osmosis membranes, higher water permeability is desired for attaining a further reduction in running cost. Known methods for satisfying such requirement include: a method in which a composite semipermeable membrane including a crosslinked polyamide polymer as a separation functional layer is brought into contact with a solution having a pH of 1 or less and with water having a temperature of 40-65°C (Patent Document 3); and a method in which the composite semipermeable membrane is brought into contact with an aqueous solution containing nitrous acid (Patent Document 4) Other relevant prior art documents are EP1020218 A, US6171497B, EP2805761A and EP2540385 A.

BACKGROUND ART DOCUMENT

PATENT DOCUMENT

Patent Document 1: JP-A-55-14706
Patent Document 2: JP-A-5-76740
Patent Document 3: JP-A-2012-143750
Patent Document 4: JP-A-2007-90192

SUMMARY OF THE INVENTION

PROBLEMS THAT THE INVENTION IS TO SOLVE

Patent Document 3, although effective in heightening the water permeability, has a problem in that the solute removal performance decreases. Patent Document 4, although effective in improving the water permeability and removal performance, has a problem in that the chemical resistance decreases undesirably.

An object of the present invention is to provide a composite semipermeable membrane having high water permeability and high solute removal performance and further having high acid resistance.

MEANS FOR SOLVING THE PROBLEMS

Accordingly, the present invention relates to a composite semipermeable membrane according to claim

ADVANTAGE OF THE INVENTION

According to the present invention, a composite semipermeable membrane having high water permeability and high solute removal performance and further having high acid resistance is obtained.

BRIEF DESCRIPTION OF THE DRAWINGS

[Fig. 1] Fig. 1 is a view which schematically illustrates the protuberance structure of the surface of a separation functional layer.
[Fig. 2] Fig. 2 is a drawing for schematically illustrating a method for measuring the heights of protrusions of a separation functional layer.
[Fig. 3] Fig. 3 is a drawing for schematically illustrating a method for determining the deformation of protrusions of a separation functional layer.

MODE FOR CARRYING OUT THE INVENTION

1. Composite Semipermeable Membrane

The composite semipermeable membrane according to the present invention includes a supporting membrane and a separation functional layer disposed on the porous supporting layer. The separation functional layer is a layer which substantially has the separation performance, while the supporting membrane has substantially no separation performance concerning separation of ions and the like, although permeable to water, and can impart strength to the separation functional layer.

(1) Supporting Membrane

In this embodiment, the supporting member includes, for example, a substrate and a porous supporting layer. However, the present invention should not be construed as being limited to that configuration. For example, the supporting membrane may include no substrate and be constituted of a porous supporting layer only.

(1-1) Substrate

Examples of the substrate include polyester-based polymers, polyamide-based polymers, polyolefin-based polymers, and mixtures or copolymers thereof. Especially preferred of these is fabric of a polyester-based polymer which is highly stable mechanically and thermally. With respect to the form of fabric, use can be advantageously made of long-fiber nonwoven fabric, short-fiber nonwoven fabric, or woven or knit fabric.

The substrate is required to have excellent suitability for membrane formation so as to avoid the following troubles: when a polymer solution is poured onto a substrate, the solution infiltrates thereinto excessively to reach the back surface; the microporous supporting layer peels off the substrate; and the membrane has defects, such as unevenness or pinholes, due to the fluffing, etc. of a substrate. Consequently, use of long-fiber nonwoven fabric is more preferred of these.

In cases when long-fibber nonwoven fabric configured of thermoplastic continuous filaments is used as the substrate, it is possible to inhibit unevenness and membrane defects from occurring due to fiber fluffing during the pouring of a polymer solution as in the case of using short-fiber nonwoven fabric. Furthermore, since tension is applied in the direction of membrane formation when the composite semipermeable membrane is continuously formed, it is preferable that long-fiber nonwoven fabric having better dimensional stability should be used as the substrate. In particular, in cases when the fibers disposed on the side opposite from the microporous supporting layer are longitudinally oriented with respect to the direction of membrane formation, this substrate can retain strength and be prevented from suffering membrane breakage, etc.

It is preferable that the fibers disposed in the surface of the substrate which is on the side opposite from the porous supporting layer should have a degree of fiber orientation in the range of 0°-25°. The degree of fiber orientation is an index which indicates the directions of the fibers of the nonwoven-fabric substrate constituting the supporting membrane, and that term means an average angle of the fibers constituting the nonwoven-fabric substrate in cases when the direction of membrane formation in continuous membrane formation is taken as 0° and the direction perpendicular to the membrane formation direction, i.e., the width direction of the nonwoven-fabric substrate, is taken as 90°. Consequently, the closer the degree of fiber orientation to 0°, the more the fibers are longitudinally oriented, while the

closer the degree of fiber orientation to 90°, the more the fibers are transversely oriented.

Although the steps for producing the composite semipermeable membrane or the steps for producing an element include a step for heating, a phenomenon occurs in which the supporting membrane or the composite semipermeable membrane shrinks due to the heating. Especially in continuous membrane formation, this shrinkage occurs considerably in the width direction, in which no tension is being applied. Since the shrinkage poses problems concerning dimensional stability, etc., substrates having a low degree of thermal dimensional change are desirable. In cases when the nonwoven-fabric substrate is one in which the difference in the degree of orientation between the fibers disposed on the side opposite from the porous supporting layer and the fibers disposed on the side facing the porous supporting layer is 10°-90°, this substrate is effective in reducing width-direction changes due to heat and is hence preferred.

It is preferable that the substrate has an air permeability of 0.5-5.0 cc/cm$^2$/sec. In cases when the air permeability of the substrate is within that range, a polymer solution for forming the porous supporting layer infiltrates into the substrate and, hence, the porous supporting layer can have improved adhesion to the substrate, thereby heightening the physical stability of the supporting membrane.

The thickness of the substrate is preferably in the range of 10 μm to 200 μm, more preferably in the range of 30 μm to 120 μm.

In this description, thickness is expressed in terms of average value unless otherwise indicated. The term "average value" herein means arithmetic average value. Specifically, the thickness of the substrate and that of the porous supporting layer are each determined through an examination of a cross-section thereof by calculating an average value of the thicknesses of 20 points measured at intervals of 20 μm along a direction (plane direction of the membrane) perpendicular to the thickness direction.

(1-2) Porous Supporting Layer

The porous supporting layer in the present invention has substantially no separating performance concerning separation of ions and the like, and serves to impart strength to the separation functional layer, which substantially has separating performance. The porous supporting layer is not particularly limited in the size and distribution of pores.

For example, preferred is a porous supporting layer which has even fine pores or has fine pores that gradually increase in size from the surface thereof on the side where the separation functional layer is to be formed to the surface thereof on the other side and in which the size of the fine pores as measured in the surface on the side where the separation functional layer is to be formed is 0.1 nm to 100 nm. There are no particular limitations on materials usable for the supporting layer and on the shapes thereof.

Usable as materials for the porous supporting layer are, for example, homopolymers and copolymers such as polysulfones, polyethersulfones, polyamides, polyesters, cellulosic polymers, vinyl polymers, poly(phenylene sulfide), poly(phenylene sulfide sulfone)s, poly(phenylene sulfone), and poly(phenylene oxide). One of these polymers can be used alone, or a mixture of two or more thereof can be used. Usable as the cellulosic polymers are cellulose acetate, cellulose nitrate, and the like. Usable as the vinyl polymers are polyethylene, polypropylene, poly(vinyl chloride), polyacrylonitrile, and the like.

Preferred of these are homopolymers and copolymers such as polysulfones, polyamides, polyesters, cellulose acetate, cellulose nitrate, poly(vinyl chloride), polyacrylonitrile, poly(phenylene sulfide), and poly(phenylene sulfide sulfone)s. More preferred examples include cellulose acetate, polysulfones, poly(phenylene sulfide sulfone)s, and poly(phenylene sulfone). Of these materials, polysulfones can be generally used since this material is highly stable chemically, mechanically, and thermally and is easy to mold.

Specifically, a polysulfone made up of repeating units represented by the following chemical formula is preferred because use of this polysulfone renders pore-diameter control of the porous supporting layer easy and this layer has high dimensional stability.

[Chem. 1]

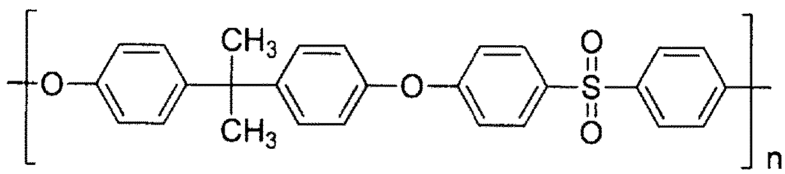

The polysulfone, when examined by gel permeation chromatography (GPC) using N-methylpyrrolidone as a solvent and using polystyrene as a reference, has a mass-average molecular weight (Mw) of preferably 10,000-200,000, more preferably 15,000-100,000.

In cases when the Mw of the polysulfone is 10,000 or higher, mechanical strength and heat resistance which are preferable for a porous supporting layer can be obtained. Meanwhile, in cases when the Mw thereof is 200,000 or less, the solution has a viscosity within an appropriate range and satisfactory formability is rendered possible.

For example, an N,N-dimethylformamide (hereinafter referred to as DMF) solution of the polysulfone is cast in a certain thickness on densely woven polyester fabric or nonwoven fabric, and the solution cast is coagulated by a wet process in water. Thus, a porous supporting layer can be obtained in which most of the surface has fine pores with a diameter of several tens of nanometers or less.

The thicknesses of the substrate and porous supporting layer affect the strength of the composite semipermeable membrane and the packing density in an element fabricated using the composite semipermeable membrane. From the standpoint of obtaining sufficient mechanical strength and sufficient packing density, the total thickness of the substrate and the porous supporting layer is preferably 30 μm to 300 μm, more preferably 100 μm to 220 μm. It is preferable that the thickness of the porous supporting layer is 20 μm to 100 μm.

The porous supporting layer to be used in the present invention can be selected from various commercial materials such as, for example, "Millipore Filter VSWP" (trade name), manufactured by Millipore Corp., and "Ultra Filter UK10" (trade name), manufactured by Toyo Roshi Ltd. The porous supporting layer can be produced by the method described in Office of Saline Water Research and Development Progress Report, No. 359(1968).

(2) Separation Functional Layer

The separation functional layer in the present invention includes a crosslinked aromatic polyamide. In particular, the separation functional layer preferably includes a crosslinked aromatic polyamide as a main component. The term "main component" means a component which accounts for at least 50% by weight of the components of the separation functional layer. The inclusion of a crosslinked aromatic polyamide in an amount of at least 50% by weight enables the separation functional layer to exhibit high separating performance.

The content of the crosslinked aromatic polyamide in the separation functional layer is preferably 80% by weight or higher, more preferably 90% by weight or higher. Even more preferably, the separation functional layer is constituted substantially of an aromatic polyamide only. The expression "the separation functional layer is constituted substantially of a crosslinked aromatic polyamide only" is intended to mean that the crosslinked aromatic polyamide accounts for at least 99% by weight of the separation functional layer.

Examples of the crosslinked aromatic polyamide include aramid compounds, but the crosslinked aromatic polyamide may contain a nonaromatic moiety in the molecular structure thereof. However, a crosslinked fully aromatic polyamide is more preferred from the standpoints of rigidity and chemical stability. The crosslinked aromatic polyamide can be formed by interfacial polycondensation of a polyfunctional aromatic amine with a polyfunctional aromatic acid halide. It is preferable that the polyfunctional aromatic amine and/or the polyfunctional aromatic acid halide should include a compound having a functionality of 3 or higher.

The separation functional layer in the present invention is hereinafter often referred to as "polyamide separation functional layer".

The term "polyfunctional aromatic amine" means an aromatic amine that has in the molecule two or more amino groups which each are a primary amino group or a secondary amino group and at least one of which is a primary amino group.

Examples of the polyfunctional aromatic amine include polyfunctional aromatic amines which each have two amino groups bonded to the aromatic ring at ortho, meta, or para positions, such as o-phenylenediamine, m-phenylenediamine, p-phenylenediamine, o-xylylenediamine, m-xylylenediamine, p-xylylenediamine, o-diaminopyridine, m-diaminopyridine, and p-diaminopyridine, and polyfunctional aromatic amines such as 1,3,5-triaminobenzene, 1,2,4-triaminobenzene, 3,5-diaminobenzoic acid, 3-aminobenzylamine, and 4-aminobenzylamine.

In particular, m-phenylenediamine, p-phenylenediamine, and 1,3,5-triaminobenzene are suitable for use when the selectively separating properties, permeability, and heat resistance of the membrane are taken into account. More preferred is to use m-phenylenediamine (hereinafter referred to also as m-PDA) among these from the standpoints of availability and handleability. One of these polyfunctional aromatic amines may be used alone, or two or more thereof may be used in combination.

The term "polyfunctional aromatic acid halide" means an aromatic acid halide having at least two halogenocarbonyl groups in the molecule. For example, examples of trifunctional acid halides include trimesoyl chloride, and examples of bifunctional acid halides include biphenyldicarbonyl dichloride, azobenzenedicarbonyl dichloride, terephthaloyl chloride, isophthaloyl chloride, and naphthalenedicarbonyl chloride.

In cases when reactivity with the polyfunctional aromatic amine is taken into account, the polyfunctional aromatic acid halide preferably is a polyfunctional aromatic acid chloride. In cases when the selectively separating properties and heat resistance of the membrane are taken into account, the polyfunctional aromatic acid halide preferably is a polyfunctional aromatic acid chloride having two to four chlorocarbonyl groups in the molecule.

Present in the polyamide separation functional layer are amide groups derived from the polymerization of the polyfunctional aromatic amine with the polyfunctional aromatic acid halide and amino and carboxy groups derived from unreacted functional groups. In the separation functional layer, the thin membrane forms a protuberance structure having recesses and protrusions. More specifically, in the protuberance structure, recesses alternate with protrusions. Hereinafter, the recesses of the protuberance structure of the separation functional layer are sometimes referred to as "pleat recesses" or referred to simply as "recesses", and the protrusions of the protuberance structure are sometimes referred to as "pleat protrusions" or referred to simply as "protrusions".

The present inventors diligently made investigations and, as a result, have discovered that the separation functional layer in which the proportion in number of protrusions each having a height of 100 nm or larger in the pleat protrusions of the protuberance structure is 80% or larger has high water permeability.

A method for determining the proportion in number of protrusions each having a height of 100 nm or larger is explained below. First, the heights of protrusions are measured by the following procedure.

(i) A cross-section of the protuberance structure is photographed with a transmission electron microscope (TEM).
(ii) A roughness curve is determined on the image obtained.
(iii) An average line for the roughness curve is drawn, and cross-sectional images of ten portions each having a width of 2.0 μm are extracted along the direction of the average line.
(iv) A ten-point average surface roughness is calculated for each of the cross-sectional images of the ten portions.
(v) With respect to each of the cross-sectional images of the ten portions, the heights of protrusions each having a height not smaller than one-fifths of the ten-point average surface roughness obtained in (iv) above are measured.

The photographing in (i) above is conducted in the following manner. First, the composite semipermeable membrane is embedded in a water-soluble polymer. The water-soluble polymer may be any water-soluble polymer capable of maintaining the shape of the sample, and PVA or the like can, for example, be used. Next, the embedded composite semipermeable membrane is dyed with $OsO_4$ in order to facilitate cross-section examination. The dyed sample is cut with an ultramicrotome along a direction perpendicular to the plane of the membrane, thereby producing an ultrathin section. The cross-section of the ultrathin section obtained is photographed with a TEM.

One portion is photographed for each membrane at a magnification of 100,000 times.

Step (ii) above is conducted in the following manner. In the cross-sectional image obtained in (i) above, in which the cross-section is perpendicular to the plane of the membrane, the surface of the protuberance structure 1 constituting the separation functional layer 2 appears as a curve made up of protrusions consecutively alternating with recesses. With respect to this curve, which indicates the surface of the protuberance structure, a roughness curve (Fig. 2) defined in accordance with ISO 4287:1997 is determined. In Fig. 1, reference numeral 3 denotes a porous supporting layer.

Next, as shown in (iii) above, images of ten portions each having a width of 2.0 μm are extracted from the image obtained in (i) above, along the direction of an average line for the roughness curve.

The average line for the roughness curve is a straight line defined in accordance with ISO 4287:1997. Specifically, the average line for a roughness curve is a straight line drawn so that the portions of the roughness curve which lie on the upper side of the average line and those lying on the lower side of the average line are equal to each other in the total area of regions surrounded by the average line and the roughness curve, over the width of the region where surface roughness measurement is made (2.0 μm in this measurement).

Since Fig. 2 is a schematic view, the portions of the roughness curve which lie on the upper side of the average line (base line; dotted line in the figure) and those lying on the lower side of the average line are not strictly equal to each other in the total area of regions surrounded by the average line and the roughness curve, unlike those in an actually obtained image.

As shown in (iv) above, a ten-point average surface roughness is calculated with respect to each of the ten images obtained in (iii) above. Specifically, in each extracted image of a portion having a width of 2 μm, the average line is used as a base line to measure the heights of protrusions of the separation functional layer and the depths of recesses thereof. The absolute values of the heights HI to H5 of five protrusions, which are the highest protrusion and the second to the fifth highest protrusions, are averaged, and the absolute values of the depths D1 to D5 of five recesses, which are the deepest recess and the second to the fifth deepest recesses, are averaged. Furthermore, the absolute values of these two averages obtained are summed up. The sum thus obtained is the ten-point average surface roughness.

Namely, ten values of ten-point surface roughness are obtained from one composite semipermeable membrane.

Next, as shown in (v) above, the heights of protrusions are measured on each of the ten images obtained in (iii) above. Measured in this step are the heights of the protrusions each having a height not smaller than one-fifths of the ten-point average surface roughness obtained for each image.

By the procedure explained above, the heights of a plurality of protrusions are obtained for each of the cross-sectional images of ten portions.

The proportion in number of protrusions each having a height of 100 nm or larger, in the protrusions, is calculated

in the following manner.

With respect to each of the cross-sectional images of ten portions described above, the protrusions each having a height not smaller than one-fifths of the ten-point average surface roughness are counted. Namely, a total of ten values a1, a2 ··· a10 are obtained from the ten images as the number of protrusions each having a height not smaller than one-fifths of the ten-point average surface roughness. Hence, a total A thereof is calculated.

Meanwhile, the protrusions each having a height not smaller than 100 nm (and not smaller than one-fifths of the ten-point average surface roughness) are counted on each image. Namely, a total of ten values b1, b2 ··· b10 are obtained from the ten images as the number of protrusions each having a height not smaller than 100 nm (and not smaller than one-fifths of the ten-point average surface roughness). Hence, a total B thereof is calculated.

The proportion of the number B to the number A (B/A) is that proportion.

The present inventors have further discovered that the separation functional layer has high water permeability and high acid resistance in cases when the separation functional layer satisfies $y/x \leq 0.81$, in which x is the molar ratio between the carboxy groups and the amide groups (carboxy groups/amide groups) in the separation functional layer and y is the molar ratio between the amino groups and the amide groups (amino groups/amide groups) therein. More preferably, $y/x \leq 0.71$.

The molar ratios between the carboxy groups, amino groups, and amide groups of the separation functional layer can be determined through an examination of the separation functional layer by $^{13}C$ solid NMR spectroscopy. Specifically, the substrate is peeled from the composite semipermeable membrane having a size of 5 $m^2$ to obtain the polyamide separation functional layer and the porous supporting layer. Thereafter, the porous supporting layer is dissolved away to obtain the polyamide separation functional layer. The polyamide separation functional layer obtained is examined by DD/MAS-$^{13}C$ solid NMR spectroscopy. The integrals of peaks each assigned to the carbon atom of any of the functional groups or the integrals of peaks each assigned to the carbon atom having any of the functional groups bonded thereto are compared. Thus, each ratio can be calculated.

The higher the hydrophilicity of the functional groups of a membrane, the higher the water permeability of the membrane. In general, the degree of hydrophilicity increases as the polarity of the functional groups increases and as the possibility of hydrogen bonding increases. Compared to the amino group, the carboxy group has a larger dipole moment and a higher degree of hydrophilicity. In cases when $y/x \leq 0.81$, the separation functional layer has sufficiently high hydrophilicity, making the membrane have enhanced water permeability.

The present inventors have furthermore discovered that x+y correlates with water permeability and acid resistance. The smaller the value of x+y, the lower the water permeability. This is presumed to be because the structure to be formed by the polymer becomes denser as the molar ratio of amide groups to the sum of amino groups and carboxy groups increases.

It is preferable that x+y should be 0.50 or larger, and that x+y be 0.98 or smaller. In cases when x+y is 0.50 or larger, the membrane can have practicable water permeability. Meanwhile, in cases when x+y is small, the polymer has formed a dense structure and is hence less apt to change in structure even under strongly acidic conditions and to decrease in solute removal ratio. In cases when x+y is 0.98 or smaller, the membrane can retain a practicable solute removal ratio even after a treatment conducted under strongly acidic conditions.

Present in the polyamide separation functional layer are amide groups derived from the polymerization of the polyfunctional aromatic amine with the polyfunctional aromatic acid halide and amino and carboxy groups derived from unreacted functional groups. Besides these groups, there are other functional groups which were possessed by the polyfunctional aromatic amine or polyfunctional aromatic acid halide. It is possible to introduce new functional groups by a chemical treatment. By performing a chemical treatment, functional groups can be introduced into the polyamide separation functional layer and the performance of the composite semipermeable membrane can be improved.

Examples of the new functional groups include alkyl groups, alkenyl groups, alkynyl groups, halogeno radicals, hydroxy group, ether group, thioether group, ester groups, aldehyde group, nitro group, nitroso group, nitrile group, and azo group. For example, chlorine radicals can be introduced by a treatment with an aqueous solution of sodium hypochlorite. Halogeno radicals can be introduced also by the Sandmeyer reaction via diazonium salt formation. Furthermore, by conducting an azo coupling reaction via diazonium salt formation, azo groups can be introduced. By hydrolyzing the diazonium salt, phenolic hydroxy groups can be introduced.

It is preferable that at least 40% by number of the protrusions should be accounted for by protrusions which, when pressed down at a force of 5 nN in 25°C pure water, have a deformation of 2.5 nm or less.

The surface of the separation functional layer is examined with an atomic force microscope (AFM) in pure water, and three regions each 2 μm square are arbitrarily selected. Ten protrusions are selected from each of the three regions. Namely, a total of 30 protrusions are selected. A circular region having a diameter of 100 nm and including the top of each selected protrusion as the center of the circular region is determined, and one point within the circular region is pressed down at a force of 5 nN. The number of protrusions X which showed a deformation of 2.5 nm or less is counted to determine the proportion (X/30). In cases when the proportion (X/30) is 40% or higher (0.4 or higher), the separation functional layer can be inhibited from deforming during operation. The proportion (X/30) is preferably 50% or higher (0.5

or higher), more preferably 60% or higher (0.6 or higher).

The deformation of a protrusion can be measured by an examination with an atomic force microscope (AFM) in the tapping mode. Specifically, the chip-to-sample distance (separation) is plotted as abscissa and the load is plotted as ordinate to obtain a force curve as shown in Fig. 3. On the force curve, a point where the cantilever is still apart from the sample is expressed by A, the point of time when the load begins to increase is expressed by B, the point where the load is 90% of the maximum load is expressed by C, and the point corresponding to the maximum load is expressed by D. The distance between points C and D was taken as the deformation. The force curve to be used is one obtained when the cantilever is brought near to the sample.

As the atomic force microscope, use can be made, for example, of Dimension FastScan, manufactured by Bruker AXS GmbH. Use of an attachment thereof renders an examination in water possible. The probe of the cantilever to be used for this examination is one having a conical (pyramidal) shape. Before being used, the cantilever is calibrated. First, using a substance having a sufficiently high hardness, the cantilever is examined for deflection sensitivity. As the substance having a sufficiently high hardness, use can be made of a silicon wafer or sapphire. Next, the spring constant of the cantilever is determined by thermal tune. By thus performing calibration, the accuracy of the measurement is improved.

2. Process for producing the Composite Semipermeable Membrane

A process for producing the composite semipermeable membrane is explained next. The process for producing the composite semipermeable membrane includes: a step in which a porous supporting layer is formed on a substrate; and a step in which a separation functional layer is formed on the porous supporting layer.

(2-1) Formation of Porous Supporting Layer

An appropriate membrane for use as the substrate and porous supporting layer can be selected from various commercial membranes such as "Millipore Filter VSWP" (trade name), manufactured by Millipore Corp., and "Ultra Filter UK10" (trade name), manufactured by Toyo Roshi Ltd.

The substrate and the porous supporting layer can be produced, for example, by the method described in Office of Saline Water Research and Development Progress Report, No. 359 (1968). Other known methods are advantageously usable for forming the porous supporting layer.

(2-2) Method for forming Separation Functional Layer

Steps for forming the separation functional layer as a component of the composite semipermeable membrane are explained next.

The steps for forming the separation functional layer include:

(a) a step in which an aqueous solution containing a polyfunctional aromatic amine is brought into contact with the surface of the porous supporting layer; (b) a step in which a solution A containing a polyfunctional aromatic acid halide dissolved therein is brought into contact with the porous supporting layer which has been contacted with the aqueous solution containing a polyfunctional aromatic amine; (c) a step in which a solution B containing the polyfunctional aromatic acid halide dissolved therein is brought into contact with the porous supporting layer, which is then heated; and (d) a step in which the excess organic-solvent solutions which have undergone the reaction are removed.

The explanation which is being made here is on the case where the supporting membrane includes a substrate and a porous supporting layer, as an example. In the case where the supporting membrane has another configuration, the "porous supporting layer" can be read as "supporting membrane".

In step (a), the concentration of the polyfunctional aromatic amine in the aqueous solution of the polyfunctional aromatic amine is preferably in the range of 0.1-20% by weight, more preferably in the range of 0.5-15% by weight. In cases when the concentration of the polyfunctional aromatic amine is within that range, it is possible to obtain sufficient solute removal performance and sufficient water permeability.

The aqueous solution of the polyfunctional aromatic amine may contain a surfactant, organic solvent, alkaline compound, antioxidant, etc. so long as these ingredients do not retard the reaction between the polyfunctional aromatic amine and the polyfunctional aromatic acid halide. Surfactants have the effect of improving the wettability of the supporting-membrane surface to reduce surface tension between the aqueous solution of the polyfunctional aromatic amine and nonpolar solvents. Some organic solvents serve as catalysts for interfacial polycondensation reactions, and there are cases where addition of such an organic solvent enables the interfacial polycondensation to be conducted efficiently.

It is preferable that the aqueous solution of the polyfunctional aromatic amine is continuously brought into even contact with the surface of the porous supporting layer. Specific examples thereof include: a method in which the aqueous solution of the polyfunctional aromatic amine is applied to the porous supporting layer; and a method in which the porous supporting layer is immersed in the aqueous solution of the polyfunctional aromatic amine. The period during which the porous supporting layer is in contact with the aqueous solution of the polyfunctional amine is preferably 1 second to 10 minutes, more preferably 10 seconds to 3 minutes.

After the aqueous solution of the polyfunctional amine is brought into contact with the porous supporting layer, the excess solution is sufficiently removed so that no droplets remain on the membrane. By sufficiently removing the excess solution, a trouble can be avoided in which any portions where droplets remain become membrane defects in the resulting porous supporting layer to reduce the removal performance.

As a method for removing the excess solution, use can be made, for example, of a method in which the supporting membrane that has been contacted with the aqueous solution of the polyfunctional amine is held vertically to make the excess aqueous solution flow down naturally or a method in which streams of a gas, e.g., nitrogen, are blown against the supporting membrane from air nozzles to forcedly remove the excess solution, as described in JP-A-2-78428. After the removal of the excess solution, the membrane surface can be dried to remove some of the water contained in the aqueous solution.

The concentrations of the polyfunctional aromatic acid halide in the organic-solvent solutions (solution A and solution B) are preferably in the range of 0.01-10% by weight, more preferably in the range of 0.02-2.0% by weight. This is because a sufficient reaction rate is obtained by regulating the concentrations thereof to 0.01% by weight or higher and the occurrence of side reactions can be inhibited by regulating the concentrations thereof to 10% by weight or less. Incorporation of an acylation catalyst into these organic-solvent solutions is more preferred because the interfacial polycondensation is accelerated thereby.

The temperature at which the porous supporting layer with which the aqueous solution containing the polyfunctional aromatic amine has been contacted is brought into contact with the solution A containing the polyfunctional aromatic acid halide dissolved therein is preferably 25-60°C. In case where the temperature is lower than 25°C, a sufficient protuberance height is not obtained. In case where the temperature exceeds 60°C, the reaction proceeds so rapidly that the separation functional layer being formed increases in thickness without coming to have a sufficient protuberance height. In either case, sufficient water permeability is not obtained.

Polyfunctional aromatic acid halides are susceptible to hydrolysis with water. It is hence preferable that just before an organic-solvent solution containing a polyfunctional aromatic halide is produced, the polyfunctional aromatic halide is synthesized or purified again. Recrystallization can be used for the purification. The purification can accelerate the reaction in steps (b) and (c), thereby improving the acid resistance.

It is desirable that the organic solvent is one which is water-immiscible and does not damage the supporting membrane and in which the polyfunctional aromatic acid halide dissolves. The organic solvent may be any such organic solvent which is inert to the polyfunctional amine compound and the polyfunctional aromatic acid halide. Organic solvents having a boiling point or initial boiling point of 100°C or higher are preferred because the retention thereof is easy to control. Preferred examples thereof include hydrocarbon compounds such as n-nonane, n-decane, n-undecane, n-dodecane, isodecane, and isododecane.

As a method for bringing the organic-solvent solutions of the polyfunctional aromatic acid halide into contact with the porous supporting layer that has been contacted with the aqueous solution of the polyfunctional aromatic amine compound, use may be made of the same method as that used for coating the porous supporting layer with the aqueous solution of the polyfunctional aromatic amine.

In step (c), a solution B containing the polyfunctional aromatic acid halide dissolved therein is brought into contact with the porous supporting layer, which is then heated. In the polyamide separation functional layer yielded in step (b), there are amide groups derived from the polymerization and amino and carboxy groups derived from unreacted functional groups. The addition of the solution B makes unreacted amino groups react further. In this step, since convection occurs due to the heating, a further improvement in protuberance height and acceleration of the reaction occur. As a result, the proportion of the protuberance having a height of 100 nm or larger increases. In addition, the molar ratio y of amino groups/amide groups decreases, and the molar ratio x of carboxy groups/amide groups remains unchanged or increases. Consequently, x/y decreases.

The temperature at which the heat treatment is conducted is 50-180°C, preferably 60-160°C. It is preferable that the porous supporting layer which has undergone the heat treatment has a retention of the organic solvent of 30-85% based on the amount of the organic solvent before the heat treatment. The retention of the organic solvent is a value determined from the weight of the membrane of just before step (b) and the weight of the membrane of just after step (c) using the following equation.

$$\text{Retention of organic solvent (\%)} = \{[(\text{weight of membrane just after step (c)}) - (\text{weight of membrane just before step (b)})]/[(\text{weight of solution A}) + (\text{weight of solution B})]\} \times 100$$

For controlling the retention of the organic solvent, use can be made of a method in which the retention thereof is controlled with oven temperature, wind velocity on the membrane surface, or heating period. In cases when the heat treatment temperature is 50°C or higher and the retention of the organic solvent is 85% or less, a synergistic effect is obtained in which the interfacial polymerization reaction is accelerated by both heat and the concentration of the polyfunctional aromatic acid halide during the interfacial polymerization. Consequently, the amount of amide groups increases, resulting in a value of x+y of 0.98 or smaller. Meanwhile, in cases when the retention of the organic solvent is 30% or higher, the oligomer molecules yielded by the interfacial polymerization can retain movability and the rate of the interfacial polymerization reaction is inhibited from decreasing. As a result, a value of x+y of 0.98 or smaller is attained.

In step (d), which is a step for removing the organic-solvent solutions that have undergone the reaction, the organic solvent is removed. For the removal of the organic solvent, use can be made, for example, of a method in which the membrane is held vertically to make the excess organic solvent flow down naturally, a method in which air is blown against the membrane with a blower to thereby remove the organic solvent, or a method in which the excess organic solvent is removed with a water/air mixture fluid.

The time period to be used for removing the organic solvent is preferably 1 minute or less. In case where the removal of the organic solvent is not performed or is conducted over too long a period, the reaction proceeds over too long a period, resulting in the formation of a thick crosslinked-polyamide layer in which x+y is less than 0.50. The resultant membrane has insufficient water permeability. Meanwhile, in case where solvent removal is conducted by solvent vaporization by merely elevating the temperature of the atmosphere, excessive water vaporization from the membrane tends to occur before completion of the solvent vaporization, resulting in reduced water permeability.

3. Use of the Composite Semipermeable Membrane

The composite semipermeable membrane of the present invention is suitable for use as a spiral type composite semipermeable membrane element produced by winding the composite semipermeable membrane around a cylindrical water collection tube having a large number of perforations, together with a feed-water channel member such as a plastic net and a permeate channel member such as tricot and optionally with a film for enhancing pressure resistance. Furthermore, such elements can be connected serially or in parallel and housed in a pressure vessel, thereby configuring a composite semipermeable membrane module.

Moreover, the composite semipermeable membrane or the element or module thereof can be combined with a pump for supplying feed water thereto, a device for pretreating the feed water, etc., thereby configuring a fluid separator. By using this fluid separator, feed water can be separated into permeate such as potable water and concentrate which has not passed through the membrane. Thus, water suited for a purpose can be obtained.

Examples of the feed water to be treated with the composite semipermeable membrane according to the present invention include liquid mixtures having a TDS (total dissolved solids) of 500 mg/L to 100 g/L, such as seawater, brackish water, and wastewater. In general, TDS means the total content of dissolved solids, and is expressed in terms of "weight/volume" or "weight ratio". According to a definition, the content can be calculated from the weight of a residue obtained by evaporating, at a temperature of 39.5-40.5°C, a solution filtrated through a 0.45-μm filter. However, a simpler method is to convert from practical salinity (S).

Higher operation pressures for the fluid separator are effective in improving the solute removal ratio. However, in view of the resultant increase in the amount of energy necessary for the operation and in view of the durability of the composite semipermeable membrane, the operation pressure at the time when water to be treated is passed through the composite semipermeable membrane is preferably 0.5-10 MPa. With respect to the temperature of the feed water, the solute removal ratio decreases as the temperature thereof rises. However, as the temperature thereof declines, the membrane permeation flux decreases. Consequently, the temperature thereof is preferably 5-45°C. Meanwhile, too high pH values of the feed water result in a concern that scale of magnesium or the like might occur in cases when the feed water has a high solute concentration like seawater. There also is a concern that the membrane might deteriorate due to the high-pH operation. Consequently, it is preferred to operate the fluid separator in a neutral range.

EXAMPLES

The present invention is explained below in more detail by reference to Examples, but the invention is not limited by the following Examples in any way.

Analysis for functional groups (quantification of carboxy groups, amino groups, and amide groups), analysis for determining the height of pleat protrusions, and determination of the retention of an organic solvent, in Examples and Comparative Examples, were conducted in the following manners. Operations were performed at 25°C unless otherwise indicated.

(Quantification of Carboxy Groups, Amino Groups, and Amide Groups)

The substrate was physically peeled from 5 $m^2$ of a composite semipermeable membrane to recover the porous supporting layer and the separation functional layer. The layers recovered were allowed to stand still for 24 hours to thereby dry the layers. Thereafter, the dried layers were introduced little by little into a beaker containing dichloromethane, and the mixture was stirred to dissolve the polymer consisting the porous supporting layer. The insoluble matter in the beaker was recovered with filter paper. This insoluble matter was introduced into a beaker containing dichloromethane, the mixture was stirred, and the insoluble matter in the beaker was recovered. This operation was repeated until the dissolution of the polymer constituting the porous supporting layer in the dichloromethane solution became not detectable. The separation functional layer recovered was dried with a vacuum dryer to remove the remaining dichloromethane. The separation functional layer obtained was freeze-pulverized to thereby obtain a powdery sample. This sample was put into a sample tube for solid NMR spectroscopy, and the sample tube was closed. This sample was analyzed by $^{13}C$ solid NMR spectroscopy by the CP/MAS method and DD/MAS method. For the $^{13}C$ solid NMR spectroscopy, use can be made, for example, of CMX-300, manufactured by Chemagnetics Inc. Examples of the measuring conditions are shown below.

Reference: polydimethylsiloxane (internal reference: 1.56 ppm)
Sample rotation speed: 10.5 kHz
Pulse repetition time: 100 s

The spectrum obtained was subjected to peak separation to obtain peaks assigned to carbon atoms to which the functional groups had respectively been bonded. The functional-group amount ratios regarding the amounts of carboxy groups, amino groups, and amide groups were determined from the areas of the peaks obtained.

(Height of Pleat Protrusions)

A composite semipermeable membrane was embedded in PVA, dyed with $OSO_4$, and cut with an ultramicrotome to produce an ultrathin section. The cross-section of the ultrathin section obtained was photographed with a transmission electron microscope. The photograph of the cross-section taken with the transmission electron microscope was analyzed with an image analysis software to measure the heights of pleat protrusions and the depths of pleat recesses, in a region having a length of 2.0 μm. A ten-point average surface roughness was calculated in the manner described above. The heights of protrusions each having a height not smaller than one-fifths of the ten-point average surface roughness were measured. Furthermore, a median value of the heights of the pleat protrusions was calculated.

(Deformation)

A deformation measurement was made by the method described above.

The surface of a separation functional layer was examined with an atomic force microscope (AFM) in pure water, and three regions each 2 μm square were arbitrarily selected. Ten protrusions were selected from each of the three regions. Namely, a total of 30 protrusions were selected. A circular region having a diameter of 100 nm and including the top of each selected protrusion as the center of the circular region was determined, and one point within the circular region was pressed down at a force of 5 nN. The number of protrusions X which showed a deformation of 2.5 nm or less as a result of the pressing was counted to determine the proportion (X/30).

The deformations of protrusions were measured with an atomic force microscope in the tapping mode as stated above.

As the atomic force microscope, use was made of Dimension FastScan, manufactured by Bruker AXS GmbH. The probe of the cantilever had a conical (pyramidal) shape.

(Retention of Organic Solvent)

The retention of an organic solvent is a value determined from the weight of the membrane of just before step (b) and the weight of the membrane of just after step (c) using the following equation.

$$\text{Retention of organic solvent (\%)} = \{[(\text{weight of membrane just after step (c)}) - (\text{weight of membrane just before step (b)})]/[(\text{weight of solution A}) + (\text{weight of solution B})]\} \times 100$$

Various properties of a composite semipermeable membrane were determined by feeding seawater regulated so as to have a pH of 6.5 (TDS concentration, 3.5%; boron concentration, about 5 ppm) to the composite semipermeable membrane at an operation pressure of 5.5 MPa to conduct a membrane filtration treatment for 24 hours and examining the resulting permeate and the feed water for quality.

(Membrane Permeation Flux)

The rate of permeation of feed water (seawater) through the membrane was expressed in terms of water permeation rate ($m^3$) per membrane area of $m^2$ per day and this rate was taken as the membrane permeation flux ($m^3/m^2$/day).

(Boron Removal Ratio)

The feed water and the permeate were analyzed for boron concentration with an ICP emission spectrometer (P-4010, manufactured by Hitachi Ltd.), and the boron removal ratio was determined using the following equation.

$$\text{Boron removal ratio (\%)} = 100 \times \{1 - (\text{boron concentration in permeate})/(\text{boron concentration in feed water})\}$$

(Acid Resistance Test)

The composite semipermeable membrane was immersed for 24 hours in an aqueous sulfuric acid solution having a pH adjusted to 1 and was then sufficiently rinsed with water.

The chemical resistance was determined from a membrane permeation flux ratio and a boron SP ratio between before and after the immersion.

$$\text{Membrane permeation flux ratio} = (\text{membrane permeation flux after immersion})/(\text{membrane permeation flux before immersion})$$

$$\text{Boron SP ratio} = [100 - (\text{boron removal ratio after immersion})]/[100 - (\text{boron removal ratio before immersion})]$$

(Reference Example 1)

A 16.0% by weight DMF solution of a polysulfone (PSf) was cast in a thickness of 200 μm on nonwoven polyester fabric (air permeability, 2.0 cc/cm$^2$/sec) under the conditions of 25°C, and this nonwoven fabric was immediately immersed in pure water and allowed to stand therein for 5 minutes, thereby producing a supporting membrane.

(Example 1)

A composite semipermeable membrane was produced in accordance with the method described in International Publication WO 2011/105278. The porous supporting membrane obtained in Reference Example 1 was immersed for 2 minutes in an aqueous solution containing 6% by weight m-phenylenediamine (m-PDA) and then slowly pulled up vertically. Nitrogen was blown thereagainst from an air nozzle to remove the excess aqueous solution from the surfaces of the supporting membrane. Thereafter, a 40°C decane solution (solution A) containing 0.16% by weight trimesoyl chloride (TMC) was applied to a surface of the membrane so that the surface was completely wetted. Subsequently,

this membrane was placed in a 120°C oven. A decane solution (solution B) containing 0.32% by weight TMC was further applied thereto, and the coated membrane was then heated until the retention of the organic solvent became 60%. Thereafter, the membrane was held vertically for 60 seconds in order to remove the excess solutions from the membrane and was dried by blowing 20°C air thereagainst with a blower for 30 seconds. Thus, a composite semipermeable membrane was obtained.

(Examples 2 to 5)

Composite semipermeable membranes of Examples 2 to 5 were obtained in the same manner as in Example 1, except that the temperature for contact with the solution A and the retention of the organic solvent after contact with the solution B were changed to the values shown in Table 1.

(Example 6)

A composite semipermeable membrane of Example 6 was obtained in the same manner as in Example 1, except that the TMC was used without being purified and that the retention of the organic solvent was changed to 58%.

(Example 7)

A composite semipermeable membrane of Example 7 was obtained in the same manner as in Example 1, except that the removal of the excess solutions was conducted by vertically holding the membrane for 180 seconds.

(Comparative Example 1)

A composite semipermeable membrane of Comparative Example 1 was obtained in the same manner as in Example 1, except that the temperature for contact with the solution A, the concentration of the solution B, the retention of the organic solvent after contact with the solution B, and the time period for removing the excess solutions were changed to the values shown in Table 1.

(Comparative Examples 2 and 3)

Composite semipermeable membranes of Comparative Examples 2 and 3 were obtained in the same manner as in Example 1, except that the step for contact with the solution B was omitted and the temperature for contact with the solution A, the retention of the organic solvent, and the time period for removing the excess solution were changed to the values shown in Table 1.

(Comparative Example 4)

A composite semipermeable membrane of Comparative Example 4 was obtained in the same manner as in Example 1, except that the step for contact with the solution B and the step of placing the membrane in a 120°C oven were omitted and the temperature for contact with the solution A, the retention of the organic solvent, and the time period for removing the excess solution were changed to the values shown in Table 1.

(Comparative Example 5)

A composite semipermeable membrane of Comparative Example 5 was obtained in the same manner as in Example 1, except that the step of placing the membrane in a 120°C oven was omitted and the temperature for contact with the solution A, the retention of the organic solvents after contact with the solution B, and the time period for removing the excess solutions were changed to the values shown in Table 1.

(Comparative Example 6)

A composite semipermeable membrane of Comparative Example 6 was obtained in the same manner as in Example 1, except that isooctane was used as a solvent and the temperature for contact with the solution A, the concentration of the solution B, the retention of the organic solvents after contact with the solution B, and the time period for removing the excess solutions were changed to the values shown in Table 1.

(Comparative Example 7)

The porous supporting membrane obtained in Reference Example 1 was immersed for 2 minutes in an aqueous solution containing 4% by weight m-PDA and then slowly pulled up vertically. Nitrogen was blown thereagainst from an air nozzle to remove the excess aqueous solution from the surfaces of the supporting membrane. Thereafter, 0.16% by weight TMC was dissolved in 40°C decane solution, and this solution was applied to a surface of the supporting membrane so that the surface was completely wetted. The membrane was then held vertically for 60 seconds in order to remove the excess solution and was dried by blowing 20°C air thereagainst with a blower. Next, the membrane was immersed for 2 minutes in 90°C hot water having a pH adjusted to 1 with sulfuric acid and was then immersed in 40°C water for 2 minutes. Thus, a composite semipermeable membrane of Comparative Example 7 was obtained.

(Comparative Example 8)

The porous supporting membrane obtained in Reference Example 1 was immersed for 2 minutes in an aqueous solution containing 4% by weight m-PDA and then slowly pulled up vertically. Nitrogen was blown thereagainst from an air nozzle to remove the excess aqueous solution from the surfaces of the supporting membrane. Thereafter, 0.16% by weight TMC was dissolved in 40°C decane solution, and this solution was applied to a surface of the supporting membrane so that the surface was completely wetted. The membrane was then held vertically for 90 seconds in order to remove the excess solution and was dried by blowing 20°C air thereagainst with a blower. Next, the membrane was rinsed with 50°C water for 2 minutes and immersed for 60 minutes in an aqueous solution containing 500 ppm m-PDA. Subsequently, the membrane was immersed for 1 minute in a 35°C aqueous solution containing 0.3% by weight sodium nitrite and having a pH adjusted to 3 with sulfuric acid, and was then rinsed with water. Finally, the membrane was immersed for 2 minutes in a 0.1% by weight aqueous solution of sodium nitrite. Thus, a composite semipermeable membrane of Comparative Example 8 was obtained.

(Comparative Example 9)

The supporting membrane obtained in Reference Example 1 was immersed for 2 minutes in a 5.5% by weight aqueous solution of m-PDA and then slowly pulled up vertically. Nitrogen was blown thereagainst from an air nozzle to remove the excess aqueous solution from the surfaces of the supporting membrane. Thereafter, a 25°C n-decane solution containing 0.165% by weight TMC was applied to a surface thereof so that the surface was completely wetted, and this membrane was allowed to stand still for 1 minute. Subsequently, the membrane was held vertically for 60 seconds in order to remove the excess solution from the membrane and was then rinsed with 50°C hot water for 2 minutes, thereby obtaining a composite semipermeable membrane. The composite semipermeable membrane obtained was immersed for 1 minute in 0.4% by weight aqueous sodium nitrite solution regulated so as to have a pH of 3 and a temperature of 35°C. The pH of the sodium nitrite was adjusted with sulfuric acid. Next, the composite semipermeable membrane was immersed for 1 minute in a 35°C 0.3% by weight aqueous solution of m-PDA to conduct a diazo coupling reaction, and was finally immersed for 2 minutes in a 35°C 0.1% by weight aqueous solution of sodium sulfite. Thus, a composite semipermeable membrane of Comparative Example 9 was obtained.

(Comparative Example 10)

The supporting membrane obtained in Reference Example 1 was immersed in 2.0% aqueous m-PDA solution for 2 minutes. After the 2-minute immersion, the supporting membrane was slowly pulled up vertically and compressed with a rubber roller to remove the excess aqueous solution from the surfaces of the supporting membrane. Thereafter, an n-hexane solution containing 0.10% by weight TMC was applied to a surface thereof so that the surface was completely wetted, and this coated membrane was allowed to stand still for 10 seconds. The membrane obtained was air-dried.

(Comparative Example 11)

A supporting membrane obtained by the same method as in Reference Example 1 except that the concentration of the polysulfone had been 18.0% by weight was immersed for 2 minutes in an aqueous solution containing 2.0% m-PDA, 1% triethylamine, and 2.3% camphorsulfonic acid and then taken out thereof. Thereafter, the excess aqueous solution on the membrane was removed using a 25-psi roller, and this membrane was dried for 1 minute.

Next, an organic solution which was ISOPAR C (manufactured by Exxon Mobil Corp.) containing 0.10% by volume TMC was dropped onto the supporting membrane in an amount of 100 mL per 1 $m^2$ of the supporting membrane while causing the supporting membrane to run at a linear velocity of 1 m/min. In this dropping, the volume of the organic solution per droplet was 0.01 mL. Droplets were simultaneously dropped at intervals of 1 cm along the width direction

of the supporting membrane, and dropping was conducted at a frequency of 1.7 times per second along the running direction. After the dropping, the supporting membrane was dried in a 60°C oven for 10 minutes.

(Comparative Example 12)

A supporting membrane obtained by the same method as in Reference Example 1 except that the concentration of the polysulfone had been 16.5% by weight was immersed for 2 minutes in a 3.5% by weight aqueous solution of m-PDA and then slowly pulled up vertically. Nitrogen was blown thereagainst from an air nozzle to remove the excess aqueous solution from the surfaces of the supporting membrane. Thereafter, a 25°C ISOPAR L (manufactured by Exxon Mobil Corp.) solution containing 0.14% by weight TMC, 0.06% by weight monohydrolyzate of TMC, and tributyl phosphate, the amount of which was 1.1 equivalent to the TMC, was applied to a surface of the supporting membrane so that the surface was completely wetted, and this membrane was allowed to stand still for 1 minute. Subsequently, the membrane was held vertically for 1 minute in order to remove the excess solution from the membrane and was then rinsed with 50°C hot water for 2 minutes, thereby obtaining a composite semipermeable membrane. Finally, the composite semipermeable membrane was immersed in 25°C pure water for 24 hours.

In Table 2 are shown the following properties of each of the composite semipermeable membranes obtained in the Examples and Comparative Examples given above: the proportion of pleat protrusions having a height of 100 nm or larger; the proportion of protrusions having a deformation of 2.5 nm or less when pressed down at a force of 5 nN; terminal functional groups; and membrane performances of before and after the acid resistance test. As the Examples show, it can be seen that the composite semipermeable membranes of the present invention have high water permeability and removal performance and has high acid resistance.

Table 1

| | Temperature for contact with solution A | Concentration of solution B | Retention of organic solvent | Period of excess-solution removal |
|---|---|---|---|---|
| | (°C) | (%) | (%) | (s) |
| Example 1 | 40 | 0.32 | 60 | 60 |
| Example 2 | 40 | 0.32 | 80 | 60 |
| Example 3 | 40 | 0.32 | 40 | 60 |
| Example 4 | 55 | 0.32 | 56 | 60 |
| Example 5 | 30 | 0.32 | 64 | 60 |
| Example 6 | 40 | 0.32 | 58 | 60 |
| Example 7 | 40 | 0.32 | 60 | 180 |
| Comp. Ex. 1 | 70 | 0.32 | 15 | 60 |
| Comp. Ex. 2 | 40 | - | 65 | 60 |
| Comp. Ex. 3 | 40 | - | 15 | 0 |
| Comp. Ex. 4 | 25 | - | 99 | 60 |
| Comp. Ex. 5 | 25 | 0.32 | 99 | 60 |

(continued)

| | Temperature for contact with solution A | Concentration of solution B | Retention of organic solvent | Period of excess-solution removal |
|---|---|---|---|---|
| | (°C) | (%) | (%) | (s) |
| Comp. Ex. 6 | 25 | 0.50 | 8 | 0 |
| Comp. Ex. 7 | 40 | - | 99 | 60 |
| Comp. Ex. 8 | 40 | - | 99 | 90 |
| Comp. Ex. 9 | 25 | - | 99 | 60 |
| Comp. Ex. 10 | 25 | - | 99 | 0 |
| Comp. Ex. 11 | 25 | - | 94 | 0 |
| Comp. Ex. 12 | 25 | - | 99 | 60 |
| * "0" in the column "Period of excess-solution removal" indicates that the removal of excess solution was omitted. | | | | |

Table 2

| | Protuberance structure | | Terminal functional groups | | Initial performance | | After acid resistance test | |
|---|---|---|---|---|---|---|---|---|
| | Proportion of protrusions having height of 100 nm or larger | Proportion of protrusions having deformation of 2.5 nm or less when pressed down at force of 5 nN | y/x | x+y | Membrane permeation flux | Boron removal ratio | Membrane permeation flux ratio | Boron SP ratio |
| | (%) | (%) | - | - | ($m^3/m^2/d$) | (%) | - | - |
| Example 1 | 84 | 42 | 0.59 | 0.62 | 0.91 | 92.0 | 1.10 | 1.13 |
| Example 2 | 83 | 11 | 0.71 | 0.99 | 0.90 | 91.2 | 1.17 | 1.20 |
| Example 3 | 86 | 39 | 0.25 | 0.65 | 0.95 | 92.0 | 1.05 | 1.13 |
| Example 4 | 81 | 50 | 0.78 | 0.57 | 0.88 | 91.0 | 1.15 | 1.18 |
| Example 5 | 82 | 41 | 0.70 | 0.63 | 0.90 | 91.1 | 1.14 | 1.15 |
| Example 6 | 82 | 24 | 0.72 | 0.79 | 0.90 | 90.4 | 1.16 | 1.19 |
| Example 7 | 84 | 86 | 0.64 | 0.41 | 0.85 | 92.2 | 1.06 | 1.09 |

(continued)

| | Protuberance structure | | Terminal functional groups | | Initial performance | | After acid resistance test | |
|---|---|---|---|---|---|---|---|---|
| | Proportion of protrusions having height of 100 nm or larger | Proportion of protrusions having deformation of 2.5 nm or less when pressed down at force of 5 nN | y/x | x+y | Membrane permeation flux | Boron removal ratio | Membrane permeation flux ratio | Boron SP ratio |
| | (%) | (%) | - | - | ($m^3/m^2/d$) | (%) | - | - |
| Comp. Ex. 1 | 48 | 90 | 0.38 | 0.40 | 0.72 | 93.0 | 1.06 | 1.14 |
| Comp. Ex. 2 | 84 | 45 | 1.00 | 0.60 | 0.80 | 91.0 | 1.31 | 1.32 |
| Comp. Ex. 3 | 80 | 65 | 0.96 | 0.49 | 0.68 | 93.9 | 1.18 | 1.15 |
| Comp. Ex. 4 | 52 | 10 | 0.82 | 1.00 | 0.89 | 89.9 | 1.35 | 1.63 |
| Comp. Ex. 5 | 53 | 9 | 0.74 | 1.01 | 0.93 | 90.8 | 1.26 | 1.51 |
| Comp. Ex. 6 | 51 | 70 | 0.42 | 0.47 | 0.70 | 89.5 | 1.07 | 1.14 |
| Comp. Ex. 7 | 50 | 10 | 0.82 | 1.00 | 0.95 | 87.5 | 1.11 | 1.10 |
| Comp. Ex. 8 | 50 | 19 | 0.55 | 0.85 | 0.90 | 94.1 | 1.13 | 1.29 |
| Comp. Ex. 9 | 50 | 11 | 1.41 | 0.99 | 0.99 | 93.7 | 1.25 | 1.59 |
| Comp. Ex. 10 | 55 | 13 | 0.58 | 0.95 | 1.17 | 65.0 | 1.31 | 1.28 |
| Comp. Ex. 11 | 69 | 1 | 0.71 | 1.20 | 1.42 | 68.0 | 1.19 | 1.21 |
| Comp. Ex. 12 | 40 | 21 | 0.51 | 0.83 | 1.23 | 70.1 | 1.21 | 1.35 |

While the invention has been described in detail and with reference to specific embodiments thereof, it will be apparent to one skilled in the art that various changes and modifications can be made therein without departing from the scope thereof.

## INDUSTRIAL APPLICABILITY

The composite semipermeable membrane of the present invention is suitable for use in the desalination of brackish water or seawater.

## DESCRIPTION OF REFERENCE NUMERALS AND SIGNS

1 Protuberance structure
2 Separation functional layer
3 Porous supporting layer

## Claims

**1.** A composite semipermeable membrane comprising a supporting membrane and a separation functional layer disposed on the supporting membrane,
wherein the separation functional layer comprises a crosslinked aromatic polyamide and has a protuberance structure including protrusions and recesses, a proportion in number of protrusions each having a height of 100 nm or larger is 80% or larger in the protrusions of the protuberance structure, and
the separation functional layer contains amino groups, carboxy groups, and amide groups and satisfies $y/x \leq 50.81$, in which,
x: molar ratio between the carboxy groups and the amide groups (carboxy groups/amide groups) determined by $^{13}C$ solid NMR spectroscopy; and
y: molar ratio between the amino groups and the amide groups (amino groups/amide groups) determined by $^{13}C$ solid NMR spectroscopy,
wherein x+y is 0.98 or smaller,
wherein the method for determining the proportion in number of protrusions each having a height of 100 nm or larger is as follows: first, the heights of protrusions are measured by the following procedure:

(i) a cross-section of the protuberance structure is photographed with a transmission electron microscope (TEM);
(ii) a roughness curve is determined on the image obtained, wherein an average line for the roughness curve is a straight line defined in accordance with ISO 4287:1997;
(iii) an average line for the roughness curve is drawn, and cross-sectional images of ten portions each having a width of 2.0 μm are extracted along the direction of the average line;
(iv) a ten-point average surface roughness is calculated for each of the cross-sectional images of the ten portions;
(v) with respect to each of the cross-sectional images of the ten portions, the heights of protrusions each having a height not smaller than one-fifths of the ten-point average surface roughness obtained in (iv) above are measured,
wherein the proportion in number of protrusions each having a height of 100 nm or larger, in the protrusions, is calculated in the following manner:

with respect to each of the cross-sectional images of ten portions described above, the protrusions each having a height not smaller than one-fifths of the ten-point average surface roughness are counted, namely, a total often values a1, a2 ··· a10 are obtained from the ten images as the number of protrusions each having a height not smaller than one-fifths of the ten-point average surface roughness, hence, a total A thereof is calculated;
wherein meanwhile, the protrusions each having a height not smaller than 100 nm and not smaller than one-fifths of the ten-point average surface roughness are counted on each image, namely, a total of ten values b1, b2 ··· b10 are obtained from the ten images as the number of protrusions each having a height not smaller than 100 nm and not smaller than one-fifths of the ten-point average surface roughness, hence, a total B thereof is calculated and the proportion of the number B to the number A (B/A) is that proportion.

**2.** The composite semipermeable membrane according to claim 1, wherein x+y is 0.50 or larger.

**3.** The composite semipermeable membrane according to claim 1 or 2, wherein at least 40% of the protrusions is accounted for by protrusions which, when pressed down at a force of 5 nN, have a deformation of 2.5 nm or less.

**4.** The composite semipermeable membrane according to any one of claims 1 to 3, wherein the separation functional layer comprises a crosslinked fully aromatic polyamide.

## Patentansprüche

**1.** Semipermeable Verbundmembran, die eine Trägermembran und eine auf der Trägermembran angeordnete Trennfunktionsschicht aufweist,

wobei die Trennfunktionsschicht ein vernetztes aromatisches Polyamid aufweist und eine Ausstülpungsstruktur mit Vorsprüngen und Aussparungen hat, wobei ein Anteil der Anzahl von Vorsprüngen mit jeweils einer Höhe von 100 nm oder mehr in den Vorsprüngen der Ausstülpungsstruktur 80% oder mehr beträgt, und
die Trennfunktionsschicht Aminogruppen, Carboxygruppen, und Amidgruppen enthält und $y/x \leq 0{,}81$ erfüllt, wobei
x: Molverhältnis zwischen den Carboxygruppen und den Amidgruppen (Carboxygruppen/Amidgruppen), bestimmt durch $^{13}C$-Feststoff-NMR-Spektroskopie; und
y: Molverhältnis zwischen den Aminogruppen und den Amidgruppen (Aminogruppen/Amidgruppen), bestimmt durch $^{13}C$-Feststoff-NMR-Spektroskopie,
wobei x+y 0,98 oder kleiner ist,
wobei das Verfahren zum Bestimmen des Anteils der Anzahl von Vorsprüngen mit jeweils einer Höhe von 100 nm oder mehr wie folgt ist: zuerst werden die Höhen der Vorsprünge durch das folgende Verfahren gemessen:

(i) ein Querschnitt der Ausstülpungsstruktur wird mit einem Transmissionselektronenmikroskop (TEM) fotografiert;
(ii) eine Rauheitskurve wird auf dem erhaltenen Bild bestimmt, wobei eine durchschnittliche Linie für die Rauheitskurve eine gerade Linie ist, die gemäß ISO 4287:1997 definiert ist;
(iii) eine Durchschnittslinie für die Rauheitskurve wird gezeichnet und Querschnittsbilder von zehn Abschnitten mit jeweils einer Breite von 2,0 μm werden entlang der Richtung der Durchschnittslinie extrahiert;
(iv) für jedes der Querschnittsbilder der zehn Abschnitte wird eine durchschnittliche Zehn-Punkt-Oberflächenrauheit berechnet;
(v) in Bezug auf jedes der Querschnittsbilder der zehn Abschnitte werden die Höhen der Vorsprünge, die jeweils eine Höhe haben, die nicht kleiner als ein Fünftel der in (iv) oben erhaltenen durchschnittlichen Zehn-Punkt-Oberflächenrauheit ist, gemessen,

wobei der Anteil der Anzahl von Vorsprüngen mit jeweils einer Höhe von 100 nm oder mehr in den Vorsprüngen auf folgende Weise berechnet wird:

in Bezug auf jedes der oben beschriebenen Querschnittsbilder von zehn Abschnitten werden die Vorsprünge, die jeweils eine Höhe haben, die nicht kleiner als ein Fünftel der durchschnittlichen Zehn-Punkt-Oberflächenrauheit ist, gezählt, und zwar werden insgesamt zehn Werte a1, a2 ··· a10 aus den zehn Bildern als die Anzahl von Vorsprüngen erhalten, die jeweils eine Höhe haben, die nicht kleiner als ein Fünftel der durchschnittlichen Zehn-Punkt-Oberflächenrauheit ist, daher wird ein Gesamt A davon berechnet;
wobei währenddessen die Vorsprünge, die jeweils eine Höhe haben, die nicht kleiner als 100 nm und nicht kleiner als ein Fünftel der durchschnittlichen Zehn-Punkt-Oberflächenrauheit ist, auf jedem Bild gezählt werden, und zwar werden insgesamt zehn Werte b1, b2 ··· b10 aus den zehn Bildern als die Anzahl von Vorsprüngen erhalten, die jeweils eine Höhe haben, die nicht kleiner als 100 nm und nicht kleiner als ein Fünftel der durchschnittlichen Zehn-Punkt-Oberflächenrauheit ist, daher wird ein Gesamt B davon berechnet, und der Anteil der Zahl B zur Zahl A (B/A) ist dieser Anteil.

**2.** Semipermeable Verbundmembran nach Anspruch 1, wobei x + y 0,50 oder größer ist.

**3.** Semipermeable Verbundmembran nach Anspruch 1 oder 2, wobei mindestens 40% der Vorsprünge auf Vorsprünge zurückzuführen sind, die beim Herunterdrücken mit einer Kraft von 5 nN eine Verformung von 2,5 nm oder weniger haben.

**4.** Semipermeable Verbundmembran nach einem der Ansprüche 1 bis 3, wobei die Trennfunktionsschicht ein vernetztes vollaromatisches Polyamid aufweist.

## Revendications

**1.** Membrane semi-perméable composite comprenant une membrane de support et une couche fonctionnelle de séparation disposée sur la membrane de support,
dans laquelle la couche fonctionnelle de séparation comprend un polyamide aromatique réticulé et a une structure à protubérances comportant des saillies et des évidements, une proportion en nombre de saillies ayant chacune une hauteur supérieure ou égale à 100 nm est supérieure ou égale à 80% dans les saillies de la structure à protubérances, et
la couche fonctionnelle de séparation contient des groupes amino, des groupes carboxy, et des groupes amide et

satisfait y/x≤0,81, où,

x : le rapport molaire entre les groupes carboxy et les groupes amide (groupes carboxy/groupes amide) déterminé par spectroscopie RMN du carbone 13 à l'état solide ; et
y: le rapport molaire entre les groupes amino et les groupes amide (groupes amino/groupes amide) déterminé par spectroscopie RMN du carbone 13 à l'état solide,
où x + y est inférieur ou égal à 0,98,

où le procédé de détermination de la proportion en nombre de saillies ayant chacune une hauteur supérieure ou égale à 100 nm est le suivant : d'abord, les hauteurs de saillies sont mesurées par la procédure suivante :

(i) une coupe transversale de la structure à protubérances est photographiée avec un microscope électronique à transmission (TEM) ;
(ii) une courbe de rugosité est déterminée sur l'image obtenue, où une ligne moyenne pour la courbe de rugosité est une ligne droite définie conformément à la norme ISO 4287:1997 ;
(iii) une ligne moyenne pour la courbe de rugosité est tracée, et des images en coupe transversale de dix parties ayant chacune une largeur de 2,0 μm sont extraites le long de la direction de la ligne moyenne ;
(iv) une rugosité de surface moyenne en dix points est calculée pour chacune des images en coupe transversale des dix parties ;
(v) par rapport à chacune des images en coupe transversale des dix parties, les hauteurs de saillies ayant chacune une hauteur non inférieure à un cinquième de la rugosité de surface moyenne en dix points obtenue en (iv) ci-dessus sont mesurées,

où la proportion en nombre de saillies ayant chacune une hauteur supérieure ou égale à 100 nm, dans les saillies, est calculée de la manière suivante :

par rapport à chacune des images en coupe transversale des dix parties décrites ci-dessus, les saillies ayant chacune une hauteur non inférieure à un cinquième de la rugosité de surface moyenne en dix points sont comptées, à savoir, un total de dix valeurs a1, a2 ... a10 sont obtenues à partir des dix images comme étant le nombre de saillies ayant chacune une hauteur non inférieure à un cinquième de la rugosité de surface moyenne en dix points, par conséquent, un total A de celles-ci est calculé ;
où, pendant ce temps, les saillies ayant chacune une hauteur non inférieure à 100 nm et non inférieure à un cinquième de la rugosité de surface moyenne en dix points sont comptées sur chaque image, à savoir, un total de dix valeurs b1, b2 ... b10 sont obtenues à partir des dix images comme étant le nombre de saillies ayant chacune une hauteur non inférieure à 100 nm et non inférieure à un cinquième de la rugosité de surface moyenne en dix points, par conséquent, un total B de celles-ci est calculé et la proportion du nombre B sur le nombre A (B/A) est cette proportion.

**2.** Membrane semi-perméable composite selon la revendication 1, dans laquelle la somme x + y est supérieure ou égale à 0,50.

**3.** Membrane semi-perméable composite selon la revendication 1 ou 2, dans laquelle au moins 40% des saillies est représenté par des saillies qui, lorsqu'elles sont pressées vers le bas à une force de 5 nN, ont une déformation inférieure ou égale à 2,5 nm.

**4.** Membrane semi-perméable composite selon l'une quelconque des revendications 1 à 3, dans laquelle la couche fonctionnelle de séparation comprend un polyamide aromatique entièrement réticulé.

*Fig. 1*

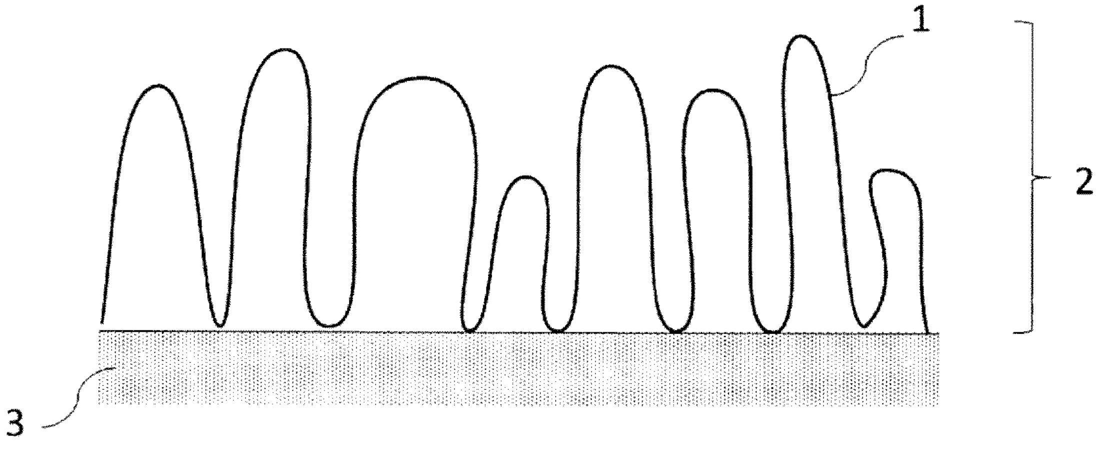


*Fig. 2*

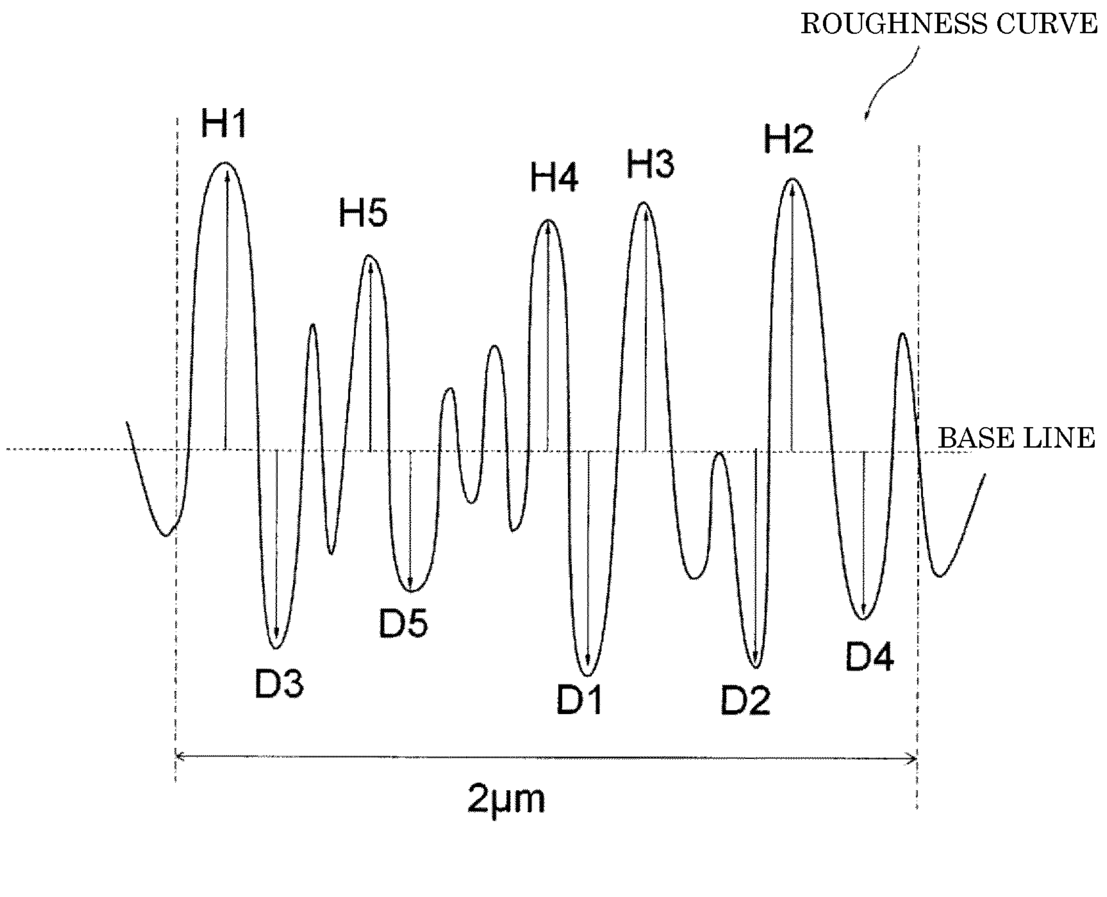

*Fig. 3*

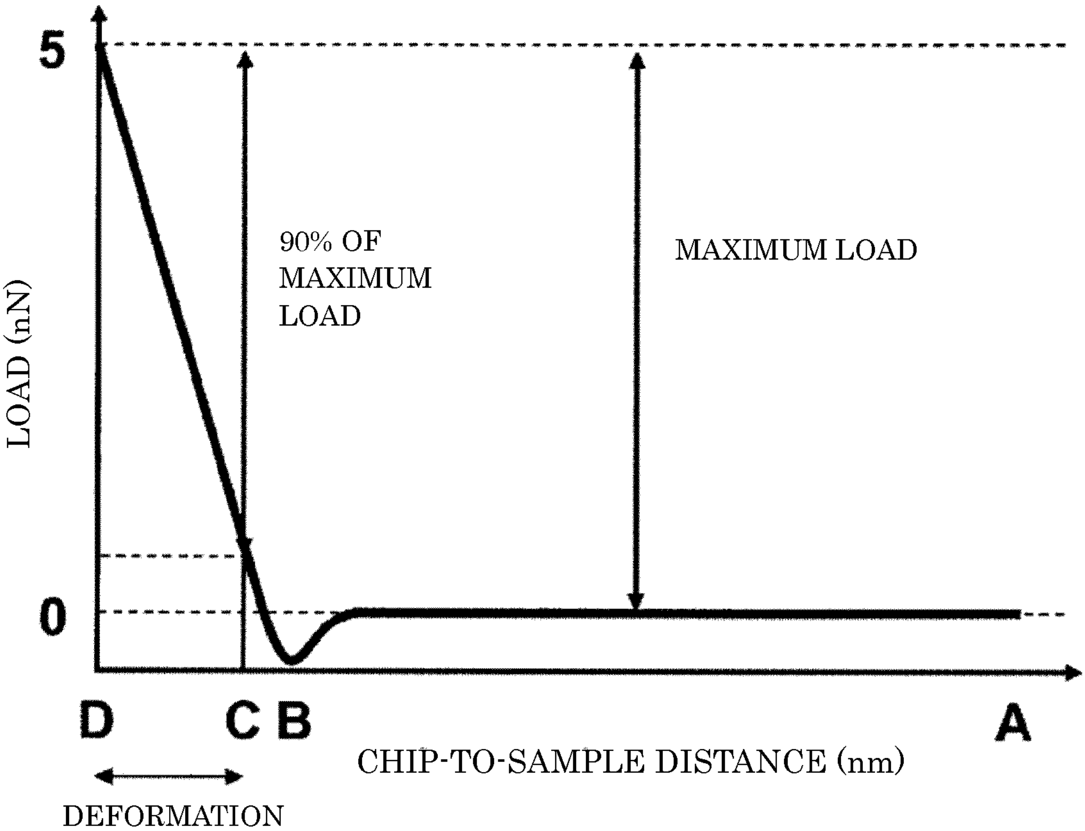
5
0
LOAD (nN)
90% OF
MAXIMUM
LOAD
MAXIMUM LOAD
D
C
B
A
CHIP-TO-SAMPLE DISTANCE (nm)
DEFORMATION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1020218 A
- US 6171497 B
- EP 2805761 A
- EP 2540385 A
- JP 55014706 A
- JP 5076740 A
- JP 2012143750 A
- JP 2007090192 A
- JP 2078428 A
- WO 2011105278 A


### Non-patent literature cited in the description


- *Office of Saline Water Research and Development Progress Report,* 1968